# EUROPÄISCHE PATENTSCHRIFT

(11) **EP 1 948 978 B1**
(45) Veröffentlichungstag und Bekanntmachung des Hinweises auf die Patenterteilung: **12.08.2009**
(21) Anmeldenummer: 06818556.0
(22) Anmeldetag: 15.11.2006
(51) Int. Cl.: F16H 55/17, B62D 5/04

(54) **KRAFTFAHRZEUG-ZAHNRAD-ANORDNUNG FÜR EIN KRAFTFAHRZEUG-HILFSGETRIEBE UND LENKKRAFTUNTERSTÜTZUNGSANTRIEBS-ZAHNRADANORDNUNG**
MOTOR-VEHICLE/GEARWHEEL ARRANGEMENT FOR A MOTOR VEHICLE AUXILIARY GEARING, AND POWER STEERING SYSTEM DRIVE GEARWHEEL ARRANGEMENT
CONFIGURATION DE PIGNON DE VÉHICULE AUTOMOBILE POUR TRANSMISSION AUXILIAIRE DE VÉHICULE AUTOMOBILE ET CONFIGURATION DE PIGNON D ENTRAÎNEMENT DE DIRECTION ASSISTÉE

(30) Priorität: 16.11.2005 DE 102005055051
(43) Veröffentlichungstag der Anmeldung: 30.07.2008
(73) Patentinhaber: IMS Gear GmbH, 78166 Donaueschingen (DE)
(72) Erfinder: OBERLE, Stephan, 78050 Villingen-Schwenningen (DE)
(74) Vertreter: Göhring, Robert
(86) Internationale Anmeldenummer: PCT/EP2006/010958
(87) Internationale Veröffentlichungsnummer: WO 2007/057168

(56) Entgegenhaltungen:
- WO-A-96/41087
- WO-A1-02/38432
- US-A1- 2005 223 831

## Beschreibung

Die Erfindung bezieht sich auf eine Kraftfahrzeug-Zahnradanordnung für ein Kraftfahrzeug-Hilfsgetriebe mit den oberbegrifflichen Merkmalen gemäß Patentanspruch 1 bzw. auf den Einsatz einer solchen Zahnradanordnung in einem Lenkkraftunterstützungsantrieb. Eine solche Kraftfahrzeug-Zahnrad anordnung ist in us 2005/0223831 A1 offenbart.

Aus WO 02/38432 A1 und US 2005/0223831 A1 ist eine elektrische Lenkkraftvorrichtung für Kraftfahrzeuge mit einer Zahnradanordnung bekannt. Zentrales Element ist ein eigentliches Zahnrad aus gespritztem Kunststoff. Ein eigentlicher scheibenförmiger Körper des Zahnrads wird um eine Rotationsachse herum von einer Durchtrittsöffnung als Zahnrad-Wellenöffnung umgeben. Außerdem führen von der Zahnrad-Wellenöffnung beabstandet Durchtrittsöffnungen durch den Körper des Zahnrades in achsparalleler Richtung zur Rotationsachse hindurch. Diese Durchtrittsöffnungen dienen zum Durchführen von Verbindungselementen zum Verbinden des Zahnrads mit zwei Flanschen einer Flanschanordnung. Die Flansche sind dabei zu dem Zahnrad zur Rotation um die gemeinsame Rotationsachse benachbart angeordnet und sind außerdem wechselseitig ineinander eingreifend angeordnet.

Zusätzlich sind elastische Verbindungselemente zwischen einen sich in axialer Richtung erstreckenden Flanschvorsprung mit zylindrischem Außenumfang und eine innenseitige Wandung des Zahnrads im Bereich der Zahnrad-Wellenöffnung gesetzt. Diese elastischen Verbindungselemente weisen elastische Vorsprünge auf, welche sich in radialer außenseitiger Richtung geradlinig in Ausnehmungen des Materials des Körpers des Zahnrades erstrecken. Durch diese elastischen vorspringenden Elemente wird ein gedämpftes Übertragen von Kräften zwischen dem Zahnrad und den Flanschen bei einer Änderung der Beschleunigung bzw. Verzögerung einer hindurchgeführten Welle bewirkt. Um die elastische Wirkung zu ermöglichen, sind die Durchtrittsöffnungen durch den Körper des Zahnrads etwas größer dimensioniert als die durch diese hindurchführenden Verbindungselemente, welche wie die Flansche aus einem starren metallischen Material ausgebildet sind.

Insbesondere der Zahnkranz und auch die elastischen Elemente bilden Komponenten einer solchen Zahnradanordnung, welche als schwächste Bauteile die Lebensdauer einer solchen Zahnradanordnung bestimmen.

Allgemein gibt es eine Vielzahl von Nachteilen bei einer solchen Zahnradanordnung. Die Fertigung der Vielzahl von Komponenten ist sowohl mit Blick auf die große Anzahl von Komponenten als auch mit Blick auf deren komplizierte Ausgestaltung aufwendig und somit teuer.

Der Zahnkranz bzw. der Körper des eigentlichen Zahnrades hat mehrere Durchbrüche bzw. Durchgangsöffnungen zur Drehmoment-Mitnahme. Dadurch gibt es bei einem Zahnrad aus spritzgegossenem Kunststoff eine entsprechende Anzahl an Bindenähten in Form der spritzguss-bedingten Nähte am Außendurchmesser oder Innendurchmesser. Eine weitere Schwächung des Zahnrades bzw. des innenseitig des Zahnkranzes ausgebildeten Körpers besteht aufgrund der Durchbrüche selbst, da diese letztendlich fehlendes Material unter der Verzahnung ausbilden und jeweils mit der Ausbildung einer Bindenaht zwingend verbunden sind.

Ein derart ausgebildeter Zahnkranz hat radial unterschiedliche Steifigkeiten. Im Bereich der Durchbrüche ist die Steifigkeit weich, was zu einer höheren Verformung des Kunststoffs führt, während im Bereich von Stegen zwischen den einzelnen Durchbrüchen eine hohe Steifigkeit besteht. Bei hoher DrehmomentBelastung wirkt eine hohe Radial- und Umfangskraft auf den Zahnkranz, was einen hohen Walk-Effekt und ein zusätzliches Einknicken im Bereich der Durchbrüche bewirkt. Nachteilhaft sind die bei einem solchen Zahnrad ausgebildeten großen Wanddicken-Unterschiede, welche partiell sehr große Wandstärken erforderlich machen, um eine ausreichende Festigkeit zu gewährleisten. Dies bedingt jedoch bei der Spritzguss-Herstellung hohe Zykluszeiten wegen der sehr großen erforderlichen Wandstärken.

Eine Drehmoment-Mitnahme erfolgt theoretisch auf alle Nocken in Form der Verbindungselemente verteilt. Wegen der Verformung unter Last wird das Drehmoment jedoch hauptsächlich über nur einzelne, insbesondere über nur zwei derartige Verbindungselemente übertragen. Dies führt zu lokal hohen spezifischen Belastungen.

Die Aufgabe der Erfindung besteht darin, eine Kfz-Zahnradanordnung bzw. eine Lenkkraftunterstützungsantriebs-Zahnradanordnung mit einem Aufbau vorzuschlagen, welcher eine gleichmäßigere und hinsichtlich der Stabilität günstiger verteilte Ausgestaltung von Mitnahmebereichen zur Drehmomentübertragung des eigentlichen Zahnrads ermöglicht. Insbesondere soll die Festigkeit des Zahnrads und dadurch die Lebensdauer erhöht werden. Vorzugsweise sollen auch die elastischen Eigenschaften bei Änderungen von positiven bzw. negativen Beschleunigungen verbessert werden.

Diese Aufgabe wird gelöst durch eine Kfz-Zahnradanordnung mit den Merkmalen gemäß Patentanspruch 1 bzw. durch die Verwendung einer solchen Zahnradanordnung als Element eines Lenkkraftunterstützungsantriebs.

Erzielt werden durch die konstruktiven Ausgestaltungen eine höhere Belastbarkeit, eine bessere Dämpfung bei spielbehaftetem Verzahnungseingriff, eine bessere Verbindungstechnik zwischen Flansch und Scheibe bzw. Flansch und Zahnrad und letztendlich durch die Fertigbarkeit eines Zahnradkörpers mit geringerer axialer Erstreckung sowie durch die Reduzierung der Anzahl kompliziert aufgebauter Komponenten eine Kosteneinsparung im Rahmen der Herstellung einer solchen Zahnradanordnung.

Ausgegangen wird somit von einer Kfz-Zahnradanordnung für ein Kfz-Hilfsgetriebe mit einem Zahnrad, mit einer Flanschanordnung mit zumindest einem, vorzugsweise zwei Flanschen, wobei das Zahnrad zu zumindest einem der Flansche zur Rotation um eine gemeinsame Rotationsachse benachbart und ineinander eingreifend angeordnet ist, und mit zumindest einem Verbindungselement zum Verbinden des Zahnrads mit zumindest einem der Flansche. Das erfindungsgemäße Zahnrad weist zur Rotationsachse parallel in den Körper des Zahnrads führend zumindest eine Verbindungselement-Aufnahmevertiefung auf.

Der zumindest eine Flansch weist zur Rotationsachse parallel vom Körper erhebend eine Erhebung zum Aufnehmen des Verbindungselements auf. Weitere Ausführungsformen können sich durch eine spiegelverkehrte Anordnung der einzelnen Komponenten zur deren Verbindung unterscheiden.

Die Verbindungselement-Aufnahmevertiefung und/oder die Erhebung einerseits und andererseits das Verbindungselement sind zum rotationsfesten, insbesondere formschlüssigen Aufnehmen des Verbindungselements ausgebildet. Die Erhebung ist dabei rippen- oder stegförmig ausgebildet und das Verbindungselement weist eine Ausnehmung auf, wobei die Ausnehmung zur formschlüssigen Verbindung des Verbindungselements und der Erhebung ausgebildet ist. Durch derartige formschlüssige Verbindungen des Verbindungselements mit den beiden durch das Verbindungselement verbundenen Komponenten wird eine unmittelbare Übertragung eines auf den Flansch oder auf den Zahnkranz des Zahnrads einwirkende Beschleunigungsänderung ermöglicht.

Insbesondere bei Verwendung eines elastischen Verbindungselements erfolgt die Übertragung auch eines ruckhaft oder abrupt eintretenden Beschleunigungsmoments nicht nur verzögerungsfrei sondern vorteilhaft auch gedämpft.

Erfindunsgsgemäße Ausgestaltungen ermöglichen eine in einer Draufsicht aus axialer Richtung vollflächige Ausgestaltung des Körpers des Zahnrads ohne durch den Körper hindurchführende Durchbrüche bzw. Durchgangsöffnungen. Vermieden werden dadurch Bindenähte. Vorzugsweise werden auch annähernd gleichmäßige Dicken des Wandmaterials des Körpers in axialer Richtung ermöglicht. Gewährleistet wird dadurch eine im Idealfall höchstmögliche Tragfähigkeit des Zahnkranzes des Zahnrads. Durch das in die Verbindungselement-Aufnahmevertiefung eintauchende Verbindungselement und gegebenenfalls über die Erhebungen, welche in entsprechende Erhebungs-Aufnahmevertiefungen am jeweils gegenüberliegenden Körper eintauchen, erfolgt die Mitnahme des Zahnrads mit den Flanschelementen bzw. umgekehrt die Mitnahme der Flanschelemente mit dem Zahnrad.

Die Verbindungselement-Aufnahmevertiefung führt dadurch bevorzugt durchbruchfrei in den Körper des Zahnrads.

Das zumindest eine Verbindungselement ist insbesondere aus einem elastischen Material, vorzugsweise einem thermoplastischen Elastomer ausgebildet. Bei einer derart elastischen Ausgestaltung des Verbindungselements hinsichtlich der Elastizität relativ zu der Materialauswahl des Zahnkranzes und der Flansche, welche relativ dazu starr ausgebildet sind, wird ein gedämpftes Übertragen von Kräften vom Zahnrad auf den Flansch bzw. umgekehrt ermöglicht, wenn eine positive oder negative Beschleunigung insbesondere abrupt auf die Zahnradanordnung einwirkt.

Wenn die Ausnehmung im Verbindungselement geringer dimensioniert ausgebildet ist als die Erhebung und das verbindungselement aus einem elastischen Material ausgebildet ist, bewirkt dies, dass das Verbindungselement nicht nur formschlüssig auf die Erhebung aufsetzbar ist sondern auch fest an der Erhebung sitzt, so dass das Verbindungselement bei der Montage nicht von der Erhebung herunterfällt oder sich in Längserstreckung einer vorzugsweise rippenförmigen Erhebung verschiebt.

Die Verbindungselement-Aufnahmevertiefung ist bevorzugt geringer dimensioniert ausgebildet als das Verbindungselement und das Verbindungselement ist dabei bevorzugt aus einem elastischen Material ausgebildet. Bei einer solchen Anordnung kann zur Montage das Verbindungselement in der Verbindungselement-Aufnahmevertiefung eingesetzt werden ohne während des Montagevorgangs daraus heraus zu fallen. Sichergestellt ist bei einer solchen Anordnung außerdem, dass das Verbindungselement spielfrei in der Verbindungselement-Aufnahmevertiefung sitzt und dadurch bei Drehmoment-Änderungen eine sofortige gedämpfte aber verzögerungsfreie Ubertragung der Drehmoment-Änderungen ermöglicht wird.

Die Verbindungselement-Aufnahmevertiefung und das Verbindungselement können kreisrund ausgebildet sein, was die Montage vereinfacht. Die Verbindungselement-Aufnahmevertiefung und das Verbindungselement können aber auch unrund, insbesondere mit Eckbereichen, ausgebildet sein. Insbesondere bei solchen Konstruktionen werden die als Dämpfungselemente ausgestalteten Verbindungselemente so weit verformt oder komprimiert, dass eine direkte Mitnahme zwischen Zahnkranz bzw. Zahnrad einerseits und Flansch bzw. Scheibe andererseits erfolgt. Gemäß der verschiedenen Ausführungsformen wird der Zahnkranz über zylindrische oder unrunde, insbesondere prisma-artige Elemente in Form der Verbindungselemente in Flansch bzw. Flansch und Scheibe zentriert. Ein radiales Abtauchen bzw. eine Reduktion der Eingriffstiefe zu einer Schnecke oder einem sonstigen in das Zahnrad eingreifenden Struktur wird verhindert, wodurch sich eine höhere Verzahnungstragfähigkeit ergibt.

Die zumindest eine Erhebung am Zahnrad greift bevorzugt in zumindest eine Erhebungsaufnahmevertiefung am Flansch radial und axial formschlüssig ein und/oder die zumindest eine Erhebung am Flansch greift bevorzugt in eine Erhebungsaufnahmevertiefung im Körper des Zahnrads achsparallel zur Rotationsachse ein.

Die zumindest eine Erhebung am Zahnrad greift vorteilhaft in zumindest eine radial größer als die Erhebung dimensionierte Erhebungsaufnahmevertiefung am Flansch ein und/oder die zumindest eine Erhebung am Flansch greift vorteilhaft in zumindest eine Erhebungsaufnahmevertiefung, die radial bzw. in Umfangsrichtung größer als die Erhebung im Körper des Zahnrads ausgebildet ist, ein. Insbesondere in Verbindung mit einem elastischen Verbindungselement, welches vollständig formschlüssig eine Verbindung zwischen dem Zahnrad und dem zumindest einen Flansch bewirkt, ermöglicht eine solche geringere Dimensionierung von insbesondere rippenförmigen oder stegförmigen Erhebungen, welche in größer dimensionierte Erhebungsaufnahmevertiefungen am gegenüberliegenden Element eintauchen, dass bei einer Beschleunigungsänderung zuerst über die elastischen Verbindungselemente eine nicht ruckartige sondern gedämpfte Beschleunigungsübertragung erfolgt, bevor eine insbesondere formschlüssige Verbindung von Erhebung und Erhebungsaufnahmevertiefung eine vollständige ungedämpfte weitere Drehmomentübertragung bewirkt.

Die Erhebungen sind als stegförmige Elemente oder Rippen ausgebildet. Durch eine derart ausgebildete und vorzugsweise verschachtelte Rippenstruktur werden konstante Wanddicken-Verhältnisse am Zahnkranz und/oder am Flansch ermöglicht. Dies ermöglicht eine kürzere Zykluszeit bei der Fertigung mittels Spritzguss, da insgesamt dünnere Wanddicken der einzelnen Komponenten ermöglicht werden. Trotzdem bleibt eine hohe Steifigkeit erhalten. Ermöglicht wird insbesondere auch eine großflächige Drehmomentübertragung zwischen Zahnkranz und Flansch bzw. Zahnkranz und Scheibe, welche alternativ zu einem Flansch an einer Seite des Zahnkranzes bzw. Zahnrads ausgebildet ist. Vorzugsweise sind jedoch auf beiden Seiten des Zahnrades zu diesem hin gerichtete innen liegende Konturen bei den einander gegenüberliegenden Flanschen der Flanschanordnung gleichartig ausgebildet. Dies ermöglicht eine Reduzierung der Anzahl zueinander verschiedenartig ausgebildeter Komponenten.

Bevorzugt wird eine Nabe, welche als Metallnabe ausgebildet ist und mit Kunststoff umspritzt ausgebildet ist, wobei der Kunststoff eine strukturiert geformte Struktur aufweist, welche in eine umgekehrt strukturiert ausgebildete Struktur einer Flanschöffnung des zumindest einen Flansches eingreift. Eine derartige Ausgestaltung ermöglicht auf vorteilhafte Art und Weise eine Nabenausgestaltung, welche ein formschlüssiges Verbinden mit zumindest einem solchen Flansch ermöglicht, so dass Drehmomente zwischen Flansch und Nabe direkt übertragbar sind.

Der zumindest eine Flansch weist bevorzugt einen zylindrischen Flanschvorsprung auf, welcher eine Flanschöffnung zur Aufnahme einer Nabe aufweist und ausgebildet ist, sich in achsparalleler Richtung zur Rotationsachse zumindest teilweise vom Flansch aus eingriffsfrei durch eine Zahnrad-Wellenöffnung des Zahnrads zu erstrecken. Der Flanschvorsprung weist bevorzugt in achsparalleler Richtung vorspringende Mitnahmeelemente auf, welche in gegenüber den vorspringenden Mitnahmeelementen größer dimensionierte eintauchende Mitnahmeelemente eines gegenüberliegenden Flansches eintauchen. Die derart ausgebildeten Mitnahmeelemente bewirken insbesondere in Verbindung mit den elastischen Verbindungselementen eine sanftere und gedämpfte Drehmomentübertragung bei Drehmomentänderungen. Erst zeitverzögert erfolgt in Rotationsrichtung ein insbesondere formschlüssiges Aneinander-Anlegen, welches dann verzögert eine Drehmomentübertragung über die ineinander eintauchenden Mitnahmeelemente bewirkt.

Solche zusätzliche Mitnahmeelemente können am Flansch z. B. angespritzte Bolzen oder Zylinderstücke sein. Bei kleinen Drehmomenten haben diese ausreichend Abstand zum Zahnkranz, damit dieser über die Dämpfungselemente in Form der elastischen Verbindungselemente entkoppelt bleibt. Dies bietet insbesondere akustische Vorteile, da eine geringere Geräuschentwicklung ermöglicht wird.

Das Zahnrad und der zumindest eine Flansch sind bevorzugt aus Kunststoff spritzgegossen ausgebildet und somit auf einfache und kostengünstige Art und Weise herstellbar.

Eine solche Zahnradanordnung bietet eine Vielzahl weiterer Vorteile. Hervorzuheben ist beispielsweise die Metallnabe, welche mit Kunststoff umspritzt ist und dadurch ein auf einfache Art und Weise angepasstes formschlüssiges Einsetzen in den Flansch ermöglicht. Vorteilhaft sind insbesondere auch eine Scheibe aus Kunststoff als Körper des Zahnrads, welche radial und axial formschlüssig in eine gegenüberliegende Flanschkontur eintaucht. Dabei werden für die ineinander eintauchenden Konturen vorzugsweise ausreichend dimensionierte Spielräume belassen, so dass eine Dämpfungswirkung durch die elastischen Verbindungselemente ermöglicht wird.

Bei kleineren Momenten wird der Zahnkranz bzw. das Zahnrad durch eine leichte radiale Verspannung mit dem Gegenrad spielfrei gehalten, was durch einen kleineren Achsabstand ermöglicht wird. Vorteilhaft sind dabei eine Dämpfung in Null-Lage und eine speziell in radialer Richtung sehr weiche Ausgestaltung. Bei höheren Drehmomenten würde der Zahnkranz normalerweise sehr stark radial abgedrängt werden, was durch die vorliegende Ausgestaltung weitestgehend oder vollständig vermieden werden kann. Durch die Ausgestaltung der Verbindungselemente als Dämpfungselemente wird diese Wirkung vorteilhaft unterstützt. Vorteilhaft wird der Zahnkranz über die zusätzliche Rippenstruktur an dem seitlichen Körper des Zahnrads zusätzlich umlaufend gestützt, so dass eine reduzierte Walk-Wirkung erzielt wird.

Auf einfache Art und Weise können als Dämpfungselemente die Verbindungselemente eingesetzt werden, welche ohne großen Aufwand montierbar sind. Aufgrund fehlender Übergänge von umlaufenden Strukturen zu davon abstehenden Strukturen werden auch rissgefährdete Schwachstellen innerhalb der Dämpfungsstrukturen verhindert. Als Dämpfungsmaterialien für die Verbindungselemente können verschiedenartigste Materialien verwendet werden. Insbesondere können prinzipiell Dämpfungsmaterialien aus thermoplastischem Elastomer oder ähnlichen Materialien in die Flanschelemente oder den Zahnkranz als eine zweite Komponente eingespritzt werden. Insbesondere wird eine dezentralere Anordnung der Dämpfungselemente auch relativ weit außen aus Sicht der Rotationsachse ermöglicht. Störende Materialverbindungen von Dämpferelement zu Dämpferelement, welche die Rippenstruktur unterbrechen, werden vermieden.

Besonders bevorzugt werden anstelle eines Flansches und einer diesem auf der anderen Seite des Zahnrads gegenüberliegenden Scheibe zwei gleiche Flansche, welche vorzugsweise so ausgestaltet sind, dass ein und dasselbe Flanschelement für beide Seiten, das heißt zur Bereitstellung beider Flansche, verwendet werden kann. Die Flansche können optional direkt auf der Nabe montiert werden, statt die Nabe mit Flanschelementen zu umspritzen. Dies ermöglicht geringere Fertigungskosten, da der Aufwand bei der Herstellung reduziert wird.

Ein Ausführungsbeispiel wird nachfolgend anhand der Zeichnung näher erläutert. Dabei werden neben einer grundlegenden Ausführungsform auch modifizierte Ausführungsformen dargestellt. Komponenten mit gleichem Aufbau oder gleicher Funktion sind dabei über die verschiedenen Ausführungsformen hinweg mit gleichen Bezugszeichen gekennzeichnet. Mittels Zusatzzeichen, insbesondere einem * oder einem °, sind Komponenten dargestellt, welche bei hinsichtlich des Grundkonzeptes gleicher Funktionalität gegenüber den entsprechenden Komponenten anderer Ausführungsformen konstruktiv modifiziert sind. Insbesondere werden bezüglich modifizierter Ausführungsformen unter Verweis auf die Erläuterungen zu den übrigen Ausführungsformen lediglich die jeweiligen Modifikationen beschrieben. Es zeigen:
- Fig.: 1 eine Zahnradanordnung gemäß einer bevorzugten Ausfüh- rungsform mit zerlegten Komponenten in perspektivi- scher Darstellung,
- Fig. 2: eine perspektivische Teilschnitt-Darstellung durch eine solche Zahnradanordnung,
- Fig. 3: eine demgegenüber modifizierte Ausführungsform,
- Fig. 4: ein bevorzugtes Flanschelement und ein Narbenelement in perspektivischer Darstellung,
- Fig. 5: eine weitere Darstellung einer gegenüber Fig. 1 modi- fizierten Ausführungsform in zerlegter perspektivi- scher Darstellung zur Veranschaulichung des Aufbaus von Verbindungselementen,
- Fig. 6: eine Schnittdarstellung durch eine zusammengesetzte Zahnradanordnung mit Komponenten gemäß Fig. 5,
- Fig. 7: eine weitere Darstellung der Komponenten gemäß der Ausführungsform aus Fig. 5 und
- Fig. 8: eine hinsichtlich der Ausgestaltung der Verbindungs- elemente modifizierte Ausführungsform in auseinander gezogener perspektivischer Darstellung.

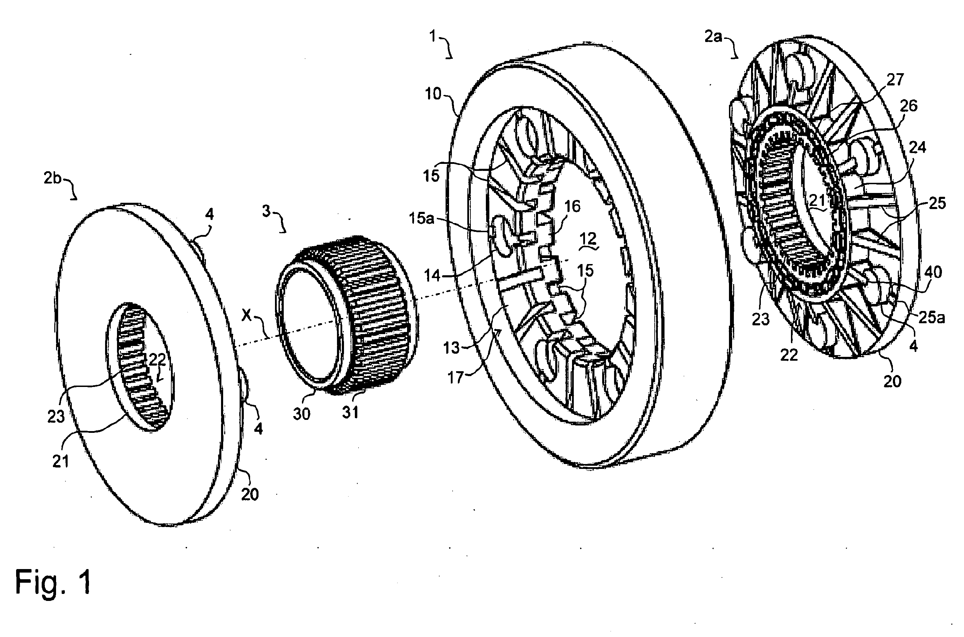

Anhand der Figuren, insbesondere Fig. 1, ist eine beispielhafte Zahnradanordnung dargestellt, welche vorteilhaft als Kfz-Zahnradanordnung in einem Lenkkraftunterstützungsantrieb einsetzbar ist. Dabei greift ein Zahnkranz 10 eines Zahnrads 1 in eine Schnecke ein, wobei eine Rotation des Zahnkranzes 10 auf eine bzw. von einer Welle übertragen wird. Seitlich des Zahnrads 1 sind zwei Flansche 2a, 2b oder ein Flansch 2a und eine gegenüberliegende Scheibe angeordnet, welche um eine gemeinsame Rotationsachse X, welche zugleich die Rotationsachse des Zahnrads 1 ist, rotationsfähig angeordnet sind. Die Anordnung ist dabei so, dass eine Drehmomentübertragung von dem Zahnrad 1 über den oder die Flansche 2a, 2b auf eine Welle bzw. eine Nabe 3 erfolgt, welche rotationsfest mit den Flanschen 2a, 2b in einer zentralen Flanschöffnung 21 verbunden ist.

Insbesondere kann die Nabe 3 als ein Metallrohr 30 mit einer außenseitigen Rohrzahnung 31 ausgebildet sein, welche in eine Flanschöffnungszahnung 23 im Bereich der Flanschöffnung 21 eingreift. Die Rohrzahnung 31 kann besonders einfach durch Umspritzen des Metallrohrs 30 mit Kunststoff ausgebildet werden.

Vorzugsweise sind die Flansche 2a, 2b jeweils mit einem Flanschvorsprung 22 ausgebildet. Der Flanschvorsprung 22 ist sich jeweils achsparallel zur Rotationsachse X erstreckend in eine Zahnrad-Wellenöffnung 12 hineinragend ausgebildet. Vorzugsweise aber nicht notwendig ist dabei eine umlaufende außenseitige Wandung 24 des Flanschvorsprungs 22 derart in die Zahnrad-Wellenöffnung 12 eingesetzt, dass keine rotationsfeste Verbindung mit einer innenseitigen Wandung 16 der Zahnrad-Wellenöffnung 12 des Zahnrads 1 eintritt.

Eine zum Zahnrad 1 gewandte Seitenwandung der Flansche 2a ist jeweils mit Erhebungen 25 ausgestaltet, welche sich vorzugsweise rippenförmig mit zunehmender Breite vom Außenumfang des jeweiligen Flansches 2a, 2b zum am weitesten abstehenden Rand der entsprechenden Flanschvorsprünge 22 erstrecken. Eine entsprechend gegenüberliegende Seitenwand 13 des Körpers 10 des Zahnrads 1 weist entsprechende Erhebungsaufnahmevertiefungen 15 auf, welche im Falle der rippenförmigen Erhebungen 25 entsprechend nutförmig ausgebildet sind.

Dimensioniert sind die Erhebungsaufnahmevertiefungen 15 so, dass die in diese eingreifenden Erhebungen 25 in axialer Richtung formschlüssig aufgenommen werden können. In radialer Richtung, worunter insbesondere auch eine Umfangsrichtung um die Rotationsachse X zu verstehen ist, bieten die Erhebungsaufnahmevertiefungen 15 vorzugsweise etwas Spiel, so dass die Erhebungen 25 einen geringen Rotationsbetrag rotieren können, bevor ein formschlüssiges Anliegen und eine Drehmomentübertragung erfolgt.

Die dem Flansch 2a, 2b gegenüberliegende Wandung 13 des Zahnrads 1 ist dabei vorzugsweise gegenüber einem Außenumfang in axialer Richtung um eine Breite des Körpers des entsprechenden Flansches 2a, 2b in axialer Richtung zurückverlagert bzw. vertieft. Dadurch wird eine Zahnradanordnung gebildet, welche eine in axialer Richtung bündige Stirnseite von Zahnradkörper 10 und Flansch 2a, 2b ausbildet.

Um ein gedämpftes Übertragen von Drehmomenten bei Änderung einer positiven oder negativen Beschleunigung zu ermöglichen, sind der oder die Flansche 2a, 2b und das Zahnrad 1 über elastische Verbindungselemente 4 miteinander verbunden. Bei den dargestellten Ausführungsformen weist die dem jeweiligen Flansch 2a, 2b gegenüberliegende Fläche 13 des Zahnrads 1 Verbindungselement-Aufnahmevertiefungen 14 auf, welche zur Aufnahme der Verbindungselemente 4 dienen. Die Dimensionierung ist dabei vorzugsweise so gewählt, dass die Verbindungselement-Aufnahmevertiefungen 14 gleich oder geringer konturiert und dimensioniert ausgebildet sind als die Verbindungselemente, so dass die Verbindungselemente mit einer leichten Vorspannung oder formschlüssig darin aufgenommen werden. Die Verbindung der Verbindungselemente 4 an dem gegenüberliegenden Flansch 2a, 2b erfolgt durch Aufsetzen auf einen Teil der Erhebungen 25a. Dazu weisen die Verbindungselemente entsprechende Ausnehmungen 40 auf, welche vorzugsweise passgenau zu den entsprechenden Erhebungen 25a geformt sind. Im Fall der rippenförmigen Erhebungen 25a mit ansteigender Höhe sind die Ausnehmungen 40 entsprechend schräg durch den Körper der elastischen Verbindungselemente 4 geführt. Vorzugsweise sind die Erhebungen 25a etwas breiter als die entsprechende Ausnehmung 40 ausgebildet, so dass die Verbindungselemente 4 zur Montage auf der entsprechenden Erhebung 25a aufgesteckt werden können ohne während der Montage wieder davon herunter zu fallen oder unbeabsichtigt längs der Erhebung 25a verschoben zu werden.

Gemäß alternativer Ausgestaltungen können entsprechend auch Verbindungselement-Aufnahmevertiefungen in dem Körper des Flansches zusätzlich oder alternativ zu entsprechenden Verbindungselement-Aufnahmevertiefungen 14 im Körper des Zahnrads 1 ausgebildet sein. Entsprechend können auch zusätzlich oder alternativ Erhebungen, insbesondere rippenförmige Erhebungen an der seitlichen Wandung 13 des Zahnrads 1 vorgesehen sein, welche in entsprechend ausgebildete Erhebungsaufnahmevertiefungen an dem gegenüberliegenden Flansch eingreifen, wobei solche Ausgestaltungen nicht dargestellt sind.

Als weiterhin optionale vorteilhafte Elemente sind an den Flanschvorsprüngen 22 in axialer Richtung ausgebildete Mitnahmeelemente achsparallel zur Rotationsachse X vorgesehen. Vorspringende Mitnahmeelemente 26 sind dabei so geformt, dass sie in am gegenüberliegenden Flansch 2a, 2b als Vertiefungen oder Öffnungen ausgebildete eintauchende Mitnahmeelemente 28 eingreifen.

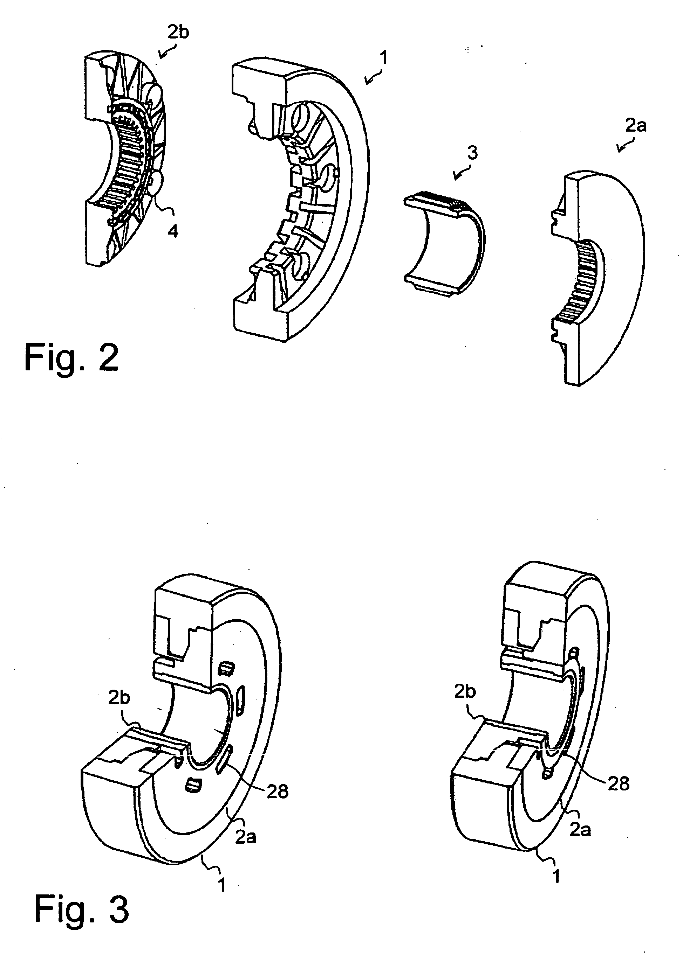

Anhand Fig. 2 und Fig. 3 sind unterschiedliche Ausgestaltungen der Flansche 2a, 2a° veranschaulicht. So weisen die Flansche 2a° gemäß Fig. 3 achsparallele Ausnehmungen auf, wobei es sich um ein lediglich optionales Merkmal handelt.

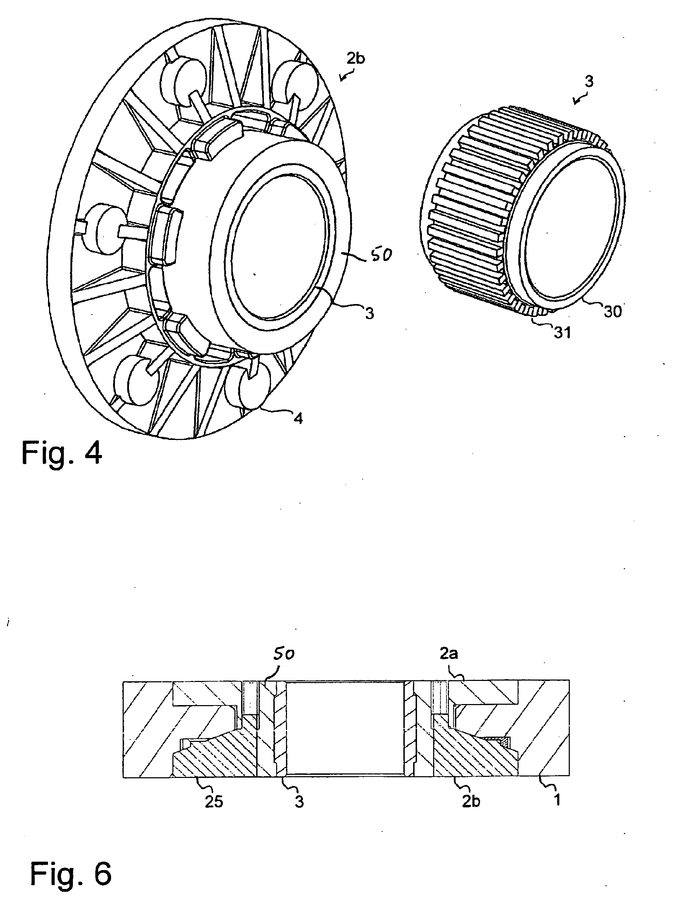

Fig. 4 zeigt eine perspektivische Ansicht auf einen Flansch 2b mit darin eingesetzter und bereits mit Kunststoff 50 umspritzter Nabe 3, wobei eine bevorzugte Nabe 3 im rechten Zeichnungsabschnitt mit einer rippenförmigen achsparallelen Zahnung als der Rohrzahnung 31 dargestellt ist. Die Rohrzahnung 31 dienen vorzugsweise als Halterippen für den aufzuspritzenden Kunststoff 50.

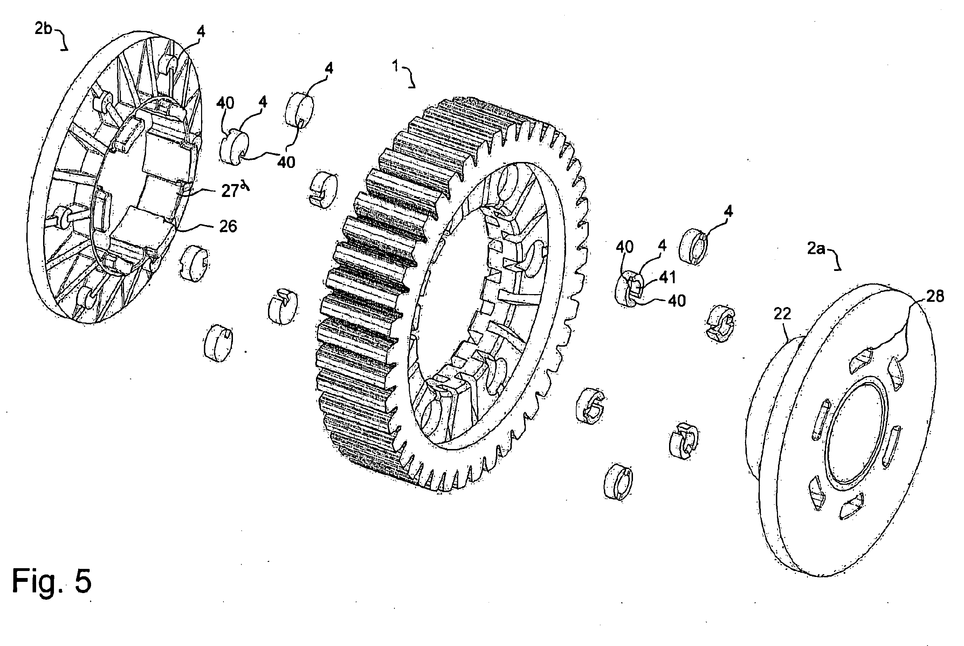

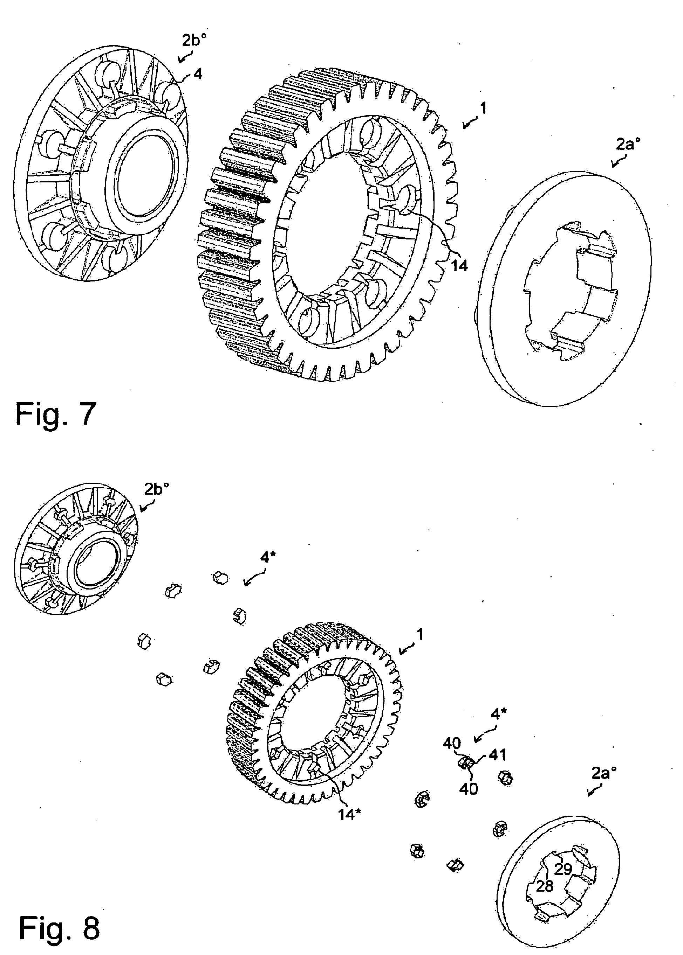

Anhand Fig. 5 gegenüber Fig. 8 sind verschiedene Ausgestaltungen der besonders bevorzugten Verbindungselemente 4, 4* veranschaulicht. Während die Verbindungselemente 4 gemäß Fig. 5 einen kreisförmigen Außenumfang aufweisen und entsprechend die Verbindungselement-Aufnahmevertiefungen 14 entsprechend ebenfalls kreisförmig ausgebildet sind, sind die alternativ ausgeformten Verbindungselemente 4* gemäß Fig. 8 unrund ausgebildet. Entsprechend sind auch die Verbindungselement-Aufnahmevertiefungen 14* in der Seitenwandung des Zahnrads 1 unrund geformt.

Vorzugsweise sind die Verbindungselemente aus elastischen Vollkörpern ausgebildet. Jedoch können die Verbindungselemente 4, 4* auch aus Hohlkörpern ausgebildet sein, wie dies aus den Fig. 5 und 8 ersichtlich ist.

## Patentansprüche

1. Kfz-Zahnradanordnung für ein Kfz-Hilfsgetriebe mit
- einem Zahnrad (1; 1*),
- einer Flanschanordnung mit zumindest einem, vorzugsweise zwei Flanschen (2a, 2b; 2a°, 2b°), wobei das Zahnrad (1; 1*) zu zumindest einem der Flansche (2a, 2b; 2a°, 2b°) zur Rotation um eine gemeinsame Rotationsachse (X) benachbart und ineinander eingreifend angeordnet ist, und
- zumindest einem Verbindungselement (4; 4*) zum Verbinden des Zahnrads (1; 1*) mit zumindest einem der Flansche (2a, 2b; 2a°, 2b°),wobei
- das Zahnrad (1; 1*) zur Rotationsachse (X) parallel in den Körper des Zahnrads (1; 1*) führend zumindest eine Verbindungselement-Aufnahmevertiefung (14; 14*) zum Aufnehmen des Verbindungselements (4; 4*) aufweist und
- der zumindest eine Flansch (2a, 2b; 2a°, 2b°) zur Rotationsachse (X) parallel vom Körper erhebend eine Erhebung (25a) zum Aufnehmen des Verbindungselements (4; 4*) aufweist, wobei
- die Verbindungselement-Aufnahmevertiefung (14; 14*) und/oder die Erhebung (25a) einerseits und andererseits das Verbindungselement (4; 4*) zum rotationsfesten, insbesondere formschlüssigen Aufnehmen des Verbindungselements (4; 4*) ausgebildet sind,
**dadurch gekennzeichnet, dass**
die Erhebung (25a) rippen- oder stegförmig ausgebildet ist und das Verbindungselement (4; 4*) eine Ausnehmung (40) aufweist, wobei die Ausnehmung (40) zur formschlüssigen Verbindung des Verbindungselements (4; 4*) und der Erhebung (25a) ausgebildet ist.

2. Kfz-Zahnradanordnung nach Anspruch 1,
**dadurch gekennzeichnet, dass**
eine spiegelverkehrte Anordnung der einzelnen Komponenten des Zahnrads (1; 1*) und des Flansches (2a, 2b; 2a⁰, 2b⁰) zu deren Verbindung vorgesehen ist.

3. Zahnradanordnung nach Anspruch 1 oder 2, bei der die Verbindungselement-Aufnahmevertiefung (14; 14*) durchbruchfrei in den Körper des Zahnrads (1) führt.

4. Zahnradanordnung nach einem vorstehenden Anspruch, bei welcher das zumindest eine Verbindungselement (4; 4*) aus einem elastischen Material, insbesondere einem thermoplastischen Elastomer, ausgebildet ist.

5. Zahnradanordnung nach einem vorstehenden Anspruch, bei welcher die Ausnehmung (40) geringer dimensioniert ausgebildet ist als die Erhebung (25a) und bei welcher das verbindungselement (4; 4*) aus einem elastischen Material ausgebildet ist.

6. Zahnradanordnung nach einem vorstehenden Anspruch, bei welcher die Verbindungselement-Aufnahmevertiefung (14; 14*) geringer dimensioniert ausgebildet ist als das Verbindungselement (4; 4*) und bei welcher das Verbindungselement (4; 4*) aus einem elastischen Material ausgebildet ist.

7. Zahnradanordnung nach einem vorstehenden Anspruch, bei welcher die Verbindungselement-Aufnahmevertiefung (14) und das Verbindungselement (4) kreisrund ausgebildet sind.

8. Zahnradanordnung nach einem der Ansprüche 1 bis 6, bei welcher die Verbindungselement-Aufnahmevertiefung (14) und das Verbindungselement (4) unrund, insbesondere mit Eckbereichen, ausgebildet ist.

9. Zahnradanordnung nach einem vorstehenden Anspruch, bei welcher die zumindest eine Erhebung am Zahnrad (1) in zumindest eine Erhebungsaufnahmevertiefung am Flansch (2a, 2b) radial und axial formschlüssig eingreift und/oder die zumindest eine Erhebung (25, 25a) am Flansch (2a) in eine Erhebungsaufnahmevertiefung (15, 15a) im Körper des Zahnrads (1) achsparallel zur Rotationsachse (X) eingreift.

10. Zahnradanordnung nach einem vorstehenden Anspruch, bei welcher die zumindest eine Erhebung am Zahnrad in zumindest eine radial größer als die Erhebung dimensionierte Erhebungsaufnahmevertiefung am Flansch eingreift und/oder die zumindest eine Erhebung (25, 25a) am Flansch (2a) in zumindest eine Erhebungsaufnahmevertiefung (15, 15a), die radial bzw. in Umfangsrichtung größer als die Erhebung (25, 25a) im Körper des Zahnrads ausgebildet ist, eingreift.

11. Zahnradanordnung nach einem vorstehenden Anspruch, bei der die Erhebungen (25, 25a) als stegförmige Elemente oder Rippen ausgebildet sind.

12. Zahnradanordnung nach einem vorstehenden Anspruch mit einer Nabe (4), welche als Metallnabe ausgebildet ist und mit Kunststoff umspritzt ausgebildet ist, wobei der Kunststoff eine strukturiert geformte Struktur aufweist, welche in eine umgekehrt strukturiert ausgebildete Struktur einer Flanschöffnung (21) des zumindest einen Flansches (2a, 2b) eingreift.

13. Zahnradanordnung nach einem vorstehenden Anspruch, bei welcher der zumindest eine Flansch (2a, 2b) einen zylindrischen Flanschvorsprung (22) aufweist, welcher eine Flanschöffnung (21) zur Aufnahme einer Nabe (4) aufweist und ausgebildet ist, sich in achsparalleler Richtung zur Rotationsachse (X) zumindest teilweise vom Flansch (2a, 2b) aus eingriffsfrei durch eine Zahnrad-Wellenöffnung (12) des Zahnrads (1) zu erstrecken.

14. Zahnradanordnung nach Anspruch 13, bei welcher der Flanschvorsprung (22) in achsparalleler Richtung vorspringende Mitnahmeelemente (26) aufweist, welche in gegenüber den vorspringenden Mitnahmeelementen größer dimensionierte eintauchende Mitnahmeelemente (27) eines gegenüberliegenden Flansches (2b) eintauchen.

15. Zahnradanordnung nach einem vorstehenden Anspruch, bei welcher das Zahnrad (1) und der zumindest eine Flansch (2a, 2b) aus Kunststoff spritzgegossen ausgebildet sind.

16. Lenkkraftunterstützungsantriebs-Zahnradanordnung mit einer Zahnradanordnung nach einem vorstehenden Anspruch.

## Claims

1. A motor vehicle gearwheel configuration for auxiliary gearing having
- a gearwheel (1, 1*),
- a flange configuration with at least one, preferably two flanges (2a, 2b; 2a°, 2b°), with the gearwheel (1, 1*) being arranged adjacent to at least one of the flanges (2a, 2b; 2a°, 2b°) for rotation about a common rotational axis (X) and engaging in one another, and
- at least one connecting element (4, 4*) for connecting the gearwheel (1, 1*) to at least one of the flanges (2a, 2b; 2a, 2b),
- with the gearwheel (1, 1*) comprising at least one depression (14, 14*) for receiving the connecting element (4; 4*), which leads into the body of the gearwheel (1, 1*) parallel to the axis of rotation (X),
- the at least one flange (2a, 2b; 2a°, 2b°) comprises a protuberance (25a) for receiving the connecting element (4; 4*), rising from the body parallel to the axis of rotation (X),
- with the depression (14; 14*) for receiving the connecting element and/or the protuberance (25a) on the one hand and the connecting element (4; 4*) on the other hand being designed to receive the connecting element (4; 4*) in rotationally-fixed, especially form-fit, manner,
**characterised in that** the protuberance (25a) has a rib-shaped or web-shaped design and the connecting element (4; 4*) comprises a recess (40), with the recess (40) being designed to connect the connecting element (4; 4*) and the protuberance (25a) with positive fit.

2. A gearwheel configuration for a motor vehicle according to Claim 1,
**characterised in that** a mirror-inverted configuration of the individual components of the gearwheel (1; 1*) and of the flange (2a, 2b; 2a°, 2b°) is provided for their connection.

3. A gearwheel configuration according to Claim 1 or 2, in which the depression (14, 14*) for receiving the connecting element leads into the body of the gearwheel (1) without breeching it.

4. A gearwheel configuration according to a preceding claim,
in which the at least one connecting element (4; 4*) is made from an elastic material, especially a thermoplastic elastomer.

5. A gearwheel configuration according to a preceding claim,
in which the recess (40) is designed with smaller dimensions than the protuberance (25a) and in which the connecting element (4, 4*) is made of an elastic material.

6. A gearwheel configuration according to a preceding claim,
in which the depression (14, 14*) for receiving the connecting element is designed with smaller dimensions than the connecting element (4, 4*) and in which the connecting element (4, 4*) is made of an elastic material.

7. A gearwheel configuration according to a preceding claim,
in which the depression (14) for receiving the connecting element and the connecting element (4) have a circular design.

8. A gearwheel configuration according to one of Claims 1 to 6,
in which the depression (14) for receiving the connecting element and the connecting element (4) have a non-circular design, especially with corner areas.

9. A gearwheel configuration according to a preceding claim,
in which the at least one protuberance on the gearwheel (1) engages radially and axially with positive fit in at least one protuberance-receiving depression on the flange (2a, 2b) and/or the at least one protuberance (25, 25a) on the flange (2a) engages parallel to the rotational axis (X) in a protuberance-receiving depression (15, 15a) in the body of the gearwheel (1).

10. A gearwheel configuration according to a preceding claim,
in which the at least one protuberance on the gearwheel engages in at least one protuberance-receiving depression on the flange having radially larger dimensions than the protuberance and/or the at least one protuberance (25, 25a) on the flange (2a) engages in at least one protuberance-receiving depression (15, 15a), which is designed to be larger radially or in the peripheral direction than the protuberance (25, 25a) in the body of the gearwheel.

11. A gearwheel configuration according to a preceding claim,
in which the protuberances (25, 25a) are configured as web-shaped elements or ribs.

12. A gearwheel configuration according to a preceding claim,
which is designed as a metal hub and is coated with plastic, the plastic having a textured structure which engages in an oppositely textured structure of a flange opening (21) of the at least one flange (2a, 2b).

13. A gearwheel configuration according to a preceding claim,
in which the at least one flange (2a, 2b) comprises a cylindrical flange projection (22), which comprises a flange opening (21) for receiving a hub (4) and is designed to extend, proceeding from the flange (2, 2a) in a direction parallel to the rotational axis (X), at least partially through a shaft opening (12) in the gearwheel (1) without engaging.

14. A gearwheel configuration according to Claim 13,
in which the flange projection (22) comprises entraining elements (26) that project in a direction parallel to the axis and reach into submerged entraining elements (27) in an opposite flange (2b), with said submerged entraining elements having larger dimensions than the projecting entraining elements.

15. A gearwheel configuration according to a preceding claim,
in which the gearwheel (1) and the at least one flange (2a, 2b) are made of plastic by injection moulding.

16. A gearwheel configuration for a power steering drive having a gearwheel configuration according to a preceding Claim.

## Revendications

1. Dispositif de pignon de véhicule automobile destiné à une transmission auxiliaire de véhicule automobile comportant :
- un pignon (1, 1*),
- un dispositif de brides comportant au moins une et de préférence deux brides (2a, 2b; 2a°, 2b°), le pignon (1, 1*) étant voisin d'au moins une des brides (2a, 2b; 2a°, 2b°) pour tourner autour d'un axe de rotation commun (X) en étant en prise, et
- au moins un élément de liaison (4, 4*) pour relier le pignon (1, 1*) à au moins l'une des brides (2a, 2b; 2a°, 2b°),
dans lequel
- le pignon (1, 1*) comporte au moins une cavité de réception d'élément de liaison (14, 14*) pour recevoir l'élément de liaison (4, 4*), de façon guidée parallèlement à l'axe de rotation (X) dans le corps du pignon (1, 1*), et
- au moins une bride (2a, 2b; 2a°, 2b°) relevant un bossage (25a) parallèlement à l'axe de rotation (X), pour recevoir l'élément de liaison (4, 4*),
- la cavité de réception (14, 14*) de l'élément de liaison et/ou le bossage (25a) d'une part, et l'élément de liaison (4, 4*) d'autre part, étant réalisés pour recevoir l'élément de liaison (4, 4*) de manière solidaire en rotation, notamment par une liaison par la forme,
**caractérisé en ce que**
le bossage (25a) est réalisé sous la forme de nervures ou d'entretoises et l'élément de liaison (4, 4*) comporte une cavité (40),
la cavité (40) étant réalisée pour relier l'élément de liaison (4, 4*) et le bossage (25a) par une liaison par la forme.

2. Dispositif de pignon de véhicule automobile selon la revendication 1,
**caractérisé par**
les différents composants du pignon (1, 1*) et de la bride (2a, 2b; 2a°, 2b°) pour leur liaison ont une disposition inversée selon une symétrie plane.

3. Dispositif de pignon de véhicule automobile selon la revendication 1 ou 2,
selon lequel
la cavité de réception (14, 14*) de l'élément de liaison est réalisée sans passage à travers le corps du pignon (1).

4. Dispositif de pignon de véhicule automobile selon les revendications précédentes,
**caractérisé en ce qu'**
au moins un élément de liaison (4, 4*) est réalisé en un matériau élastique notamment en un élastomère thermoplastique.

5. Dispositif de pignon de véhicule automobile selon les revendications précédentes,
selon lequel
la cavité (40) est dimensionnée de manière plus réduite que le bossage (25a), et l'élément de liaison (4, 4*) est en une matière élastique.

6. Dispositif de pignon de véhicule automobile selon les revendications précédentes,
selon lequel
la cavité de réception de l'élément de liaison (14, 14*) est dimensionnée de manière plus faible que l'élément de liaison (4, 4*), qui est en une matière élastique.

7. Dispositif de pignon de véhicule automobile selon les revendications précédentes,
selon lequel
la cavité de réception de l'élément de liaison (14) et de l'élément de liaison (4) est de forme circulaire.

8. Dispositif de pignon de véhicule automobile selon les revendications 1 à 6,
selon lequel
la cavité de réception (14) de l'élément de liaison et de l'élément de liaison (4) a une forme non circulaire notamment avec des zones en forme de coins.

9. Dispositif de pignon de véhicule automobile selon les revendications précédentes,
selon lequel
au moins un bossage du pignon (1) pénètre radialement et axialement par une liaison par la forme dans au moins une cavité de réception de bossage de la bride (2a, 2b) et/ou au moins un bossage (25, 25a) de la bride (2a) pénètre dans une cavité de réception de bossage (15, 15a) du corps du pignon (1), de manière parallèle à l'axe de rotation (X).

10. Dispositif de pignon de véhicule automobile selon les revendications précédentes,
selon lequel
au moins un bossage du pignon pénètre dans au moins une cavité de réception de bossage de la bride, de dimension radiale plus grande que le bossage et/ou au moins ce bossage (25, 25a) de la bride (2a) pénètre dans au moins une cavité de réception de bossage (15, 15a) qui est plus grande dans la direction radiale ou dans la direction périphérique que le bossage (25, 25a) du corps du pignon.

11. Dispositif de pignon de véhicule automobile selon les revendications précédentes,
selon lequel
les bossages (25, 25a) sont réalisés comme des éléments en forme d'entretoises ou de nervures.

12. Dispositif de pignon de véhicule automobile selon les revendications précédentes, comportant un moyeu (4) réalisé comme moyeu métallique et surmoulé de matière plastique,
la matière plastique ayant une structure de forme structurée pénétrant dans une structure structurée de façon inverse d'une ouverture de bride (21) d'au moins une bride (2a, 2b).

13. Dispositif de pignon de véhicule automobile selon les revendications précédentes,
selon lequel
au moins une bride (2a, 2b) comporte une saillie cylindrique (22) de bride munie d'une ouverture de bride (21) pour recevoir un moyeu (4) et elle est réalisée pour s'étendre dans la direction parallèle à l'axe de rotation (X) au moins en partie, à partir de la bride (2a, 2b), pour traverser sans prise une ouverture d'arbre à pignon (12) du pignon (1).

14. Dispositif de pignon de véhicule automobile selon la revendication 13,
selon lequel
la saillie de bride (22) comporte des éléments d'entraînement (26) venant en saillie dans la direction parallèle à l'axe et qui pénètrent dans les éléments d'entraînement (27) entre eux, de dimension plus grande que les éléments d'entraînement en saillie d'une bride (2b), opposée.

15. Dispositif de pignon de véhicule automobile selon les revendications précédentes,
selon lequel
le pignon (1) et au moins une bride (2a, 2b) sont injectés en matière plastique.

16. Dispositif de pignon denté d'entraînement auxiliaire de direction assistée comportant un dispositif de pignon selon les revendications précédentes.
